# FASCICULE DE BREVET EUROPEEN

(11) **EP 3 302 943 B1**
(45) Date de publication et mention de la délivrance du brevet: **05.05.2021**
(21) Numéro de dépôt: 16731221.4
(22) Date de dépôt: 23.05.2016
(51) Int. Cl.: B29C 70/32, B29C 41/04, C22C 47/00, C04B 35/71, B29C 70/02, B28B 1/20, B28B 21/30, B28B 23/00, B29C 41/36, C04B 35/117, C04B 35/573, C04B 35/626, C04B 35/80

(54) **PROCÉDÉ D'IMPRÉGNATION D'UNE TEXTURE FIBREUSE DE FORME CREUSE**
VERFAHREN ZUM IMPRÄGNIEREN EINER HOHLEN FASRIGEN TEXTUR
METHOD FOR IMPREGNATING A HOLLOW FIBROUS TEXTURE

(30) Priorité: 04.06.2015 FR 1555090
(43) Date de publication de la demande: 11.04.2018
(73) Titulaire: Safran Aircraft Engines, 75015 Paris (FR); SAFRAN, 75015 Paris (FR)
(72) Inventeur: GODON, Thierry, 77550 Moissy-Cramayel Cedex (FR); PODGORSKI, Michaël, 77550 Moissy-Cramayel Cedex (FR)
(74) Mandataire: Cabinet Beau de Loménie
(86) Numéro de dépôt international: PCT/FR2016/051214
(87) Numéro de publication internationale: WO 2016/193569

(56) Documents cités:
- EP-A2- 0 240 177
- DE-A1- 4 238 878
- GB-A- 798 045
- US-A- 5 025 849

## Description

### Arrière-plan de l'invention

L'invention concerne un procédé d'imprégnation d'une texture fibreuse de forme creuse.

Les matériaux composites et en particulier les composites Oxyde/Oxyde peuvent être élaborés de manière connue par empilement de plis pré-imprégnés obtenus par tissage bidimensionnel. Ce type de méthode peut toutefois conduire à l'obtention de matériaux composites stratifiés sensibles au phénomène de délaminage lorsque soumis à une contrainte mécanique.

Afin d'améliorer la résistance au délaminage des matériaux composites, il a été recherché d'éviter l'obtention d'interfaces entre les plis bidimensionnels, et éventuellement de mettre en œuvre un ou plusieurs tissus tridimensionnels à la place des tissus bidimensionnels. Il a alors été envisagé de former la matrice par introduction de particules solides réfractaires dans le renfort fibreux suivie d'un frittage de ces particules. Afin de réaliser l'introduction des particules réfractaires dans le renfort fibreux, divers procédés connus ont été mis en œuvre comme l'aspiration de poudres submicroniques (« APS »). Dans ces procédés, les particules réfractaires sont introduites dans le renfort fibreux à partir d'une barbotine comprenant notamment la poudre de particules réfractaires en suspension dans un milieu liquide, cette barbotine pouvant en outre éventuellement comporter un liant organique ainsi qu'un agent dispersant.

Cependant, il a été constaté que ces procédés peuvent ne pas fournir des résultats entièrement satisfaisants lorsque le renfort fibreux présente une forme complexe, en particulier une forme creuse, ou une forte épaisseur. Ces procédés peuvent, en effet, dans ce cas être relativement longs et délicats à mettre en œuvre afin d'obtenir la répartition souhaitée des particules réfractaires à l'intérieur du renfort fibreux. En particulier, dans le cas d'une pièce conique de forme creuse, il peut être nécessaire afin d'éviter des plis du ou des tissus de mettre en œuvre un outillage relativement complexe en plusieurs parties, ainsi que des séquences complexes de préparation au moulage et de démoulage.

On connait par ailleurs le document EP 0 240 177 qui décrit un procédé de fabrication d'une pièce en matériau composite.

Il existe donc un besoin pour disposer d'un procédé de traitement d'une texture fibreuse de forme creuse permettant d'obtenir de manière simple une répartition contrôlée des particules solides réfractaires à l'intérieur de ladite texture et, par conséquent, une pièce en matériau composite présentant les propriétés désirées.

Il existe en particulier un besoin pour disposer d'un procédé de traitement d'une texture fibreuse de forme creuse permettant d'obtenir de manière simple une répartition homogène des particules solides réfractaires à l'intérieur de ladite texture.

### Objet et résumé de l'invention

A cet effet, l'invention propose, selon un premier mode de réalisation, un procédé d'imprégnation d'une texture fibreuse de forme creuse , le procédé comprenant au moins les étapes suivantes :
- introduire une première suspension comprenant une première poudre de particules solides en matériau céramique ou en carbone dans un volume intérieur délimité par une face interne d'une texture fibreuse de forme creuse placée dans un moule, une face externe de la texture fibreuse étant présente en regard d'une paroi du moule, et
- imprégner par action de la force centrifuge la texture fibreuse par la première suspension par mise en rotation du moule sur lui-même en faisant varier la vitesse de rotation du moule durant l'imprégnation de la texture par la première suspension.

L'invention propose, en outre, selon un deuxième mode de réalisation un procédé d'imprégnation d'une texture fibreuse de forme creuse, le procédé comprenant au moins les étapes suivantes :
- introduire une première suspension comprenant une première poudre de particules solides en matériau céramique ou en carbone dans un volume intérieur délimité par une face interne d'une texture fibreuse de forme creuse placée dans un moule, une face externe de la texture fibreuse étant présente en regard d'une paroi du moule,
- imprégner par action de la force centrifuge la texture fibreuse par la première suspension par mise en rotation du moule sur lui-même,
- introduire dans le volume intérieur, après imprégnation de la texture fibreuse par la première suspension, une deuxième suspension comprenant une deuxième poudre de particules solides en matériau céramique ou en carbone, la deuxième suspension étant différente de la première suspension, et
- imprégner par action de la force centrifuge la texture fibreuse par la deuxième suspension par mise en rotation du moule sur lui-même, l'imprégnation de la texture par la première suspension et l'imprégnation de la texture par la deuxième suspension étant effectuées à des vitesses de rotation du moule différentes.

La deuxième poudre peut être différente de la première poudre. Ainsi, le matériau constituant les particules de la deuxième poudre peut, dans un exemple de réalisation, être différent du matériau constituant les particules de la première poudre. En variante, la taille moyenne des particules de la première poudre peut être différente de la taille moyenne des particules de la deuxième poudre. Sauf mention contraire, on entend par « taille moyenne », la taille donnée par la distribution granulométrique statistique à la moitié de la population, dite D50. Il est encore possible que les première et deuxième poudres diffèrent en termes de distribution de la taille des particules. En variante encore, les particules de la première poudre peuvent avoir une forme différente des particules de la deuxième poudre. En variante ou en combinaison, la concentration en particules solides de la première poudre dans la première suspension peut être différente de la concentration en particules solides de la deuxième poudre dans la deuxième suspension.

Dans les premier et deuxième modes de réalisation décrits ci-dessus, la rotation du moule sur lui-même génère l'application d'une force centrifuge sur la première suspension permettant d'imprégner la texture fibreuse par la première suspension. En outre, dans le deuxième mode de réalisation décrit ci-dessus, la rotation du moule sur lui-même génère l'application d'une force centrifuge sur la deuxième suspension permettant d'imprégner par la deuxième suspension la texture fibreuse comprenant les particules de la première poudre.

Les deux modes de réalisation de l'invention permettent chacun d'imprégner une texture fibreuse par au moins une suspension de particules solides en matériau céramique ou en carbone sous l'action de la force centrifuge générée par la rotation du moule en faisant varier la vitesse de rotation du moule lors de l'imprégnation.

Dans les deux modes de réalisation décrits ci-dessus, le fait de faire varier la vitesse de rotation du moule lors de l'imprégnation permet de contrôler de manière satisfaisante la répartition des particules dans la texture fibreuse creuse, et en particulier d'obtenir une répartition homogène des particules si cela est souhaité, et ce même pour une texture de forte épaisseur ou présentant une perméabilité variable le long de son épaisseur. A la différence du cas où la texture fibreuse est imprégnée par centrifugation par une phase continue comme une résine, le fait d'imprégner une texture fibreuse par une suspension de particules solides présente une difficulté supplémentaire liée au fait de réussir à transporter les particules de la suspension au travers du réseau de porosité de la texture fibreuse. Bien qu'il soit possible d'obtenir un résultat satisfaisant lorsque l'on imprègne par action de la force centrifuge une texture fibreuse par une résine en imposant au moule une vitesse de rotation constante durant l'imprégnation, des résultats d'une telle qualité ne sont pas toujours obtenus lorsque la résine est remplacée par une suspension de particules en particulier lorsque la texture présente une épaisseur relativement élevée. L'invention propose donc une solution pour résoudre le problème spécifique de l'imprégnation d'une texture fibreuse par une ou plusieurs suspensions de particules solides, cette solution résidant dans le fait de faire varier la vitesse de rotation du moule lors de l'imprégnation de la texture fibreuse par cette ou ces suspensions.

Dans un exemple de réalisation, dans le cas du premier mode de réalisation, l'imprégnation de la texture par la première suspension peut être réalisée en imposant tout d'abord une première vitesse de rotation constante au moule puis en imposant ensuite une deuxième vitesse de rotation constante au moule, la deuxième vitesse de rotation étant différente de la première vitesse de rotation.

Dans ce cas, l'imprégnation de la texture fibreuse par la première suspension est réalisée en fixant tout d'abord la vitesse de rotation du moule à une première valeur non nulle puis en faisant varier la vitesse de rotation du moule afin de la fixer ensuite à une deuxième valeur non nulle différente de la première valeur.

Cet exemple de réalisation permet d'imprégner majoritairement une première zone de l'épaisseur de la texture fibreuse par la première suspension durant une première phase d'imprégnation durant laquelle le moule tourne à la première vitesse de rotation et d'imprégner majoritairement une deuxième zone de l'épaisseur de la texture fibreuse par la première suspension durant une deuxième phase d'imprégnation durant laquelle le moule tourne à la deuxième vitesse de rotation. Les première et deuxième zones peuvent être disjointes ou se recouvrir partiellement.

Par « imprégner majoritairement une zone de l'épaisseur d'une texture fibreuse par une suspension durant une phase d'imprégnation », il faut comprendre que plus de 50%, par exemple au moins 75%, des particules de ladite suspension ayant pénétré dans la texture fibreuse durant ladite phase d'imprégnation vont être présentes dans ladite zone à l'issue de ladite phase d'imprégnation.

Dans un exemple de réalisation, dans le cas du premier mode de réalisation, la première vitesse de rotation peut être supérieure à la deuxième vitesse de rotation.

Un tel exemple de réalisation est avantageux dans le cas notamment où l'on cherche à imprégner de manière homogène une texture relativement épaisse. En effet, le fait d'appliquer une première vitesse de rotation « élevée » permet de conférer aux particules une force centrifuge suffisante pour assurer leur migration au travers du réseau de porosité jusqu'à une zone externe de l'épaisseur de la texture et le fait d'appliquer une deuxième vitesse de rotation « faible » permet en diminuant la force centrifuge appliquée sur les particules d'imprégner majoritairement une zone interne de l'épaisseur de la texture. Cet exemple de réalisation peut encore être avantageux dans le cas d'une texture fibreuse à perméabilité variable présentant une faible perméabilité dans une zone interne de son épaisseur. Il est dans ce cas avantageux d'appliquer tout d'abord une vitesse de rotation « élevée » afin de conférer une force centrifuge suffisante aux particules pour leur permettre de traverser la zone interne de perméabilité faible et ainsi de migrer jusque dans la zone externe de l'épaisseur de la texture, la vitesse de rotation est ensuite réduite pour remplir de particules la zone interne de l'épaisseur de la texture.

En variante, dans le cas du premier mode de réalisation, la deuxième vitesse de rotation peut être supérieure à la première vitesse de rotation.

Dans un autre exemple de réalisation, dans le cas du premier mode de réalisation, la vitesse de rotation du moule ne présente pas de palier à une valeur constante durant toute l'imprégnation de la texture fibreuse par la première suspension. Dans ce cas, la vitesse de rotation du moule peut par exemple être strictement croissante ou strictement décroissante durant toute l'imprégnation de la texture fibreuse par la première suspension.

Dans un exemple de réalisation, dans le cas du deuxième mode de réalisation, l'imprégnation de la texture par la première suspension peut être réalisée en imposant une première vitesse de rotation constante au moule et l'imprégnation de la texture par la deuxième suspension peut ensuite être réalisée en imposant une deuxième vitesse de rotation constante au moule, la deuxième vitesse de rotation étant différente de la première vitesse de rotation.

Dans ce cas, l'imprégnation de la texture fibreuse par la première suspension est réalisée en fixant la vitesse de rotation du moule à une première valeur non nulle, puis l'imprégnation de la texture fibreuse par la deuxième suspension est ensuite réalisée en fixant la vitesse de rotation du moule à une deuxième valeur non nulle différente de la première valeur.

Cet exemple de réalisation permet d'imprégner majoritairement une première zone de l'épaisseur de la texture fibreuse par la première suspension durant une première phase d'imprégnation durant laquelle le moule tourne à la première vitesse de rotation et d'imprégner majoritairement une deuxième zone de l'épaisseur de la texture fibreuse par la deuxième suspension durant une deuxième phase d'imprégnation durant laquelle le moule tourne à la deuxième vitesse de rotation, la deuxième zone étant différente de la première zone. Les première et deuxième zones peuvent être disjointes ou se recouvrir partiellement.

Dans un exemple de réalisation, dans le cas du deuxième mode de réalisation, la première vitesse de rotation peut être supérieure à la deuxième vitesse de rotation.

Comme expliqué plus haut dans le cadre du premier mode de réalisation, un tel exemple de réalisation est avantageux dans le cas notamment où l'on cherche à imprégner de manière homogène avec des poudres différentes en termes notamment de matériau constituant les particules solides ou de taille moyenne des particules solides une texture relativement épaisse ou une texture à perméabilité variable présentant une faible perméabilité dans une zone interne de son épaisseur.

En variante, dans le cas du deuxième mode de réalisation, la deuxième vitesse de rotation peut être supérieure à la première vitesse de rotation.

Dans un autre exemple de réalisation, dans le cas du deuxième mode de réalisation, la vitesse de rotation du moule ne présente pas de palier à une valeur constante durant toute l'imprégnation de la texture fibreuse par les première et deuxième suspensions. Dans ce cas, la vitesse de rotation du moule peut par exemple être strictement croissante ou strictement décroissante durant toute l'imprégnation de la texture fibreuse par les première et deuxième suspensions.

Dans un exemple de réalisation, le sens de rotation du moule peut être inversé une ou plusieurs fois durant l'imprégnation de la texture fibreuse par la première suspension et/ou durant l'imprégnation de la texture fibreuse par la deuxième suspension.

Un tel exemple de réalisation est avantageux afin d'homogénéiser, lorsque cela est souhaité, la répartition des particules dans la texture fibreuse.

En variante, le sens de rotation du moule peut ne pas être modifié durant toute l'imprégnation de la texture fibreuse par la première suspension et/ou durant toute l'imprégnation de la texture fibreuse par la deuxième suspension.

Dans un exemple de réalisation, la première et/ou la deuxième suspension peut être introduite dans le volume intérieur par pulvérisation, par exemple par un ou plusieurs dispositifs de pulvérisation animés d'un mouvement de translation et/ou de rotation durant la pulvérisation.

Dans un exemple de réalisation, la texture fibreuse peut être axisymétrique.

La texture fibreuse peut par exemple avoir une forme tronconique. En variante, la texture fibreuse peut avoir une forme cylindrique.

Dans un exemple de réalisation, la texture fibreuse peut être obtenue par tissage bidimensionnel ou par tissage tridimensionnel.

La texture fibreuse peut comporter des fils en matériau céramique ou en carbone. En particulier, la texture fibreuse peut comporter des fils céramiques d'oxyde réfractaire et les particules de la première poudre et/ou les particules de la deuxième poudre peuvent être des particules céramiques d'oxyde réfractaire.

La présente invention vise également un procédé de fabrication d'une pièce en matériau composite comportant au moins les étapes suivantes :
- imprégner la texture fibreuse au moins par la première suspension par mise en oeuvre d'un procédé tel que décrit plus haut,
- éliminer au moins le milieu liquide de la première suspension imprégnant la texture fibreuse,
- former une phase de matrice densifiant la texture fibreuse au moins à partir des particules de la première poudre afin d'obtenir la pièce en matériau composite.

La pièce en matériau composite ainsi obtenue peut être un tube, un carter ou un anneau de turbine.

Dans un exemple de réalisation, la phase de matrice peut en tout ou partie être formée par frittage des particules de la première poudre. Une fois que la pièce est obtenue, elle peut subir de manière connue en soi une étape d'usinage afin de lui conférer les dimensions souhaitées et/ou une étape de revêtement par au moins un revêtement de barrière thermique ou de barrière environnementale, par exemple.

### Brève description des dessins

D'autres caractéristiques et avantages de l'invention ressortiront de la description suivante d'exemples particuliers de réalisation de l'invention, donnés à titre d'exemples non limitatifs, en référence aux dessins annexés, sur lesquels :
- la figure 1 représente une texture fibreuse creuse placée dans un moule destinée à être traitée par un procédé selon l'invention,
- la figure 2 représente une coupe selon II-II de la figure 1,
- la figure 3 représente le moule des figures 1 et 2 muni d'un dispositif de pulvérisation destiné à permettre l'introduction d'une suspension de particules dans le volume intérieur,
- la figure 4 illustre la réalisation d'un exemple d'étape d'imprégnation de la texture fibreuse mise en œuvre dans le cadre d'un procédé selon l'invention,
- la figure 5 est un graphe montrant un exemple d'évolution de la vitesse de rotation du moule durant l'étape d'imprégnation illustrée à la figure 4,
- la figure 6 représente de manière très schématique un résultat pouvant être obtenu après imprégnation dans le cadre du deuxième mode de réalisation selon l'invention, et
- les figures 7 et 8 illustrent la réalisation de différentes variantes d'étapes d'imprégnation de la texture fibreuse selon l'invention.

Sur les figures, les dimensions relatives des différents éléments n'ont pas nécessairement été respectées par souci de lisibilité.

### Description détaillée de modes de réalisation

Des exemples de moyens utilisables pour former la texture fibreuse destinée à être mise en œuvre dans le cadre d'un procédé selon l'invention vont être décrits ci-dessous.

La texture fibreuse peut être obtenue par tissage multicouche entre une pluralité de couches de fils de chaîne et une pluralité de couches de fils de trame. Le tissage multicouche réalisé peut être notamment un tissage à armure "interlock", c'est-à-dire une armure de tissage dans laquelle chaque couche de fils de trame lie plusieurs couches de fils de chaîne avec tous les fils d'une même colonne de trame ayant le même mouvement dans le plan de l'armure. D'autres types de tissage multicouche pourront bien entendu être utilisés.

Lorsque la texture fibreuse est réalisée par tissage, le tissage peut être réalisé avec des fils de chaîne s'étendant dans la direction longitudinale de la texture fibreuse, étant noté qu'un tissage avec des fils de trame dans cette direction est également possible.

Dans un exemple de réalisation, les fils utilisés peuvent être des fils céramiques en oxyde réfractaire, des fils en carbure de silicium ou des fils en carbone. Différents modes de tissage multicouche utilisables sont décrits dans le document WO 2006/136755.

La texture fibreuse peut encore être obtenue par assemblage d'au moins deux structures fibreuses. Dans ce cas, les deux structures fibreuses peuvent être liées entre elles, par exemple par couture ou aiguilletage. Les structures fibreuses peuvent notamment être chacune obtenue à partir d'une couche ou d'un empilement de plusieurs couches de :
- tissu unidimensionnel (UD),
- tissu bidimensionnel (2D),
- tresse,
- tricot,
- feutre,
- nappe unidirectionnelle (UD) de fils ou câbles ou nappes multidirectionnelle (nD) obtenue par superposition de plusieurs nappes UD dans des directions différentes et liaison des nappes UD entre elles par exemple par couture, par agent de liaison chimique ou par aiguilletage.

Dans le cas d'un empilement de plusieurs couches, celles-ci peuvent être liées entre elles par exemple par couture, par implantation de fils ou d'éléments rigides ou par aiguilletage.

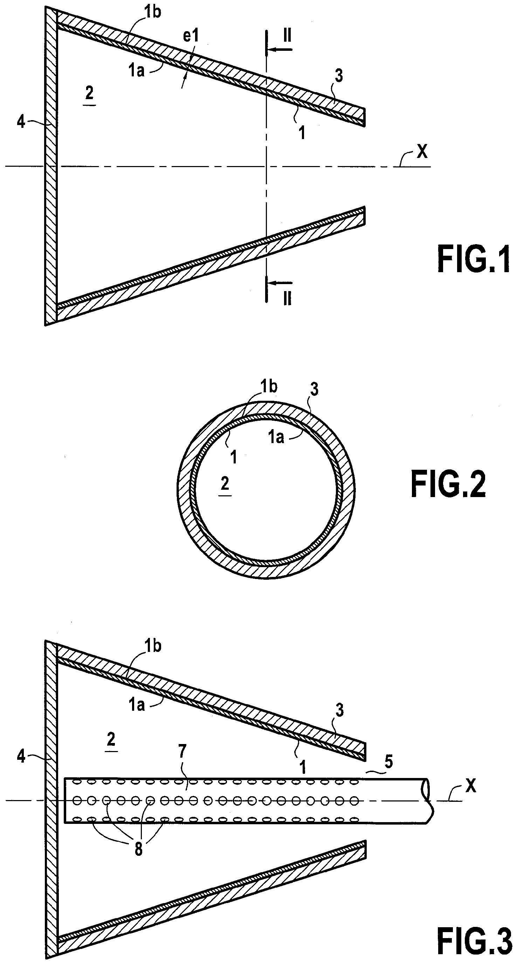

Une fois la texture creuse 1 fabriquée, celle-ci est ensuite placée dans un moule en positionnant la face externe 1b de la texture 1 en regard d'une paroi latérale 3 du moule comme illustré aux figures 1 et 2. Comme illustré, la texture fibreuse 1 est creuse et délimite un volume intérieur 2. Dans l'exemple illustré, le moule ainsi que la texture 1 sont de forme axisymétrique, ici tronconique. On ne sort pas du cadre de l'invention lorsque le moule et la texture ont une autre forme comme une forme cylindrique par exemple. La face interne la de la texture 1 présente dans le moule délimite un volume intérieur 2 dans lequel une ou plusieurs suspensions sont destinées à être introduites. La texture 1 présente dans le moule peut, avant mise en œuvre de l'étape d'imprégnation, être sèche et éventuellement ne pas contenir de particules solides dans sa porosité interne. En variante, la texture 1 a subi avant son placement dans le moule une étape préalable d'imprégnation ayant conduit à l'introduction de particules solides dans sa porosité interne. Une fois, la texture 1 introduite dans le moule, ce dernier est refermé à une de ses extrémités par une paroi de fond 4. L'introduction de la texture 1 dans le moule peut être effectuée manuellement. Une fois introduite dans le moule, la texture 1 est maintenue en position dans le moule, par exemple par fixation des bords de la texture au moule, cette fixation pouvant être réalisée par des éléments rapportés comme des vis ou par un adhésif. Il est encore possible de maintenir en position la texture 1 dans le moule grâce à un noyau central creux ajouré positionné en regard de la face interne la de la texture 1. Ce noyau central présente une pluralité d'ajours permettant à un milieu liquide de le traverser afin d'imprégner la texture 1.

L'épaisseur e₁ de la texture 1 peut être supérieure ou égale à 0,5 mm, par exemple être comprise entre 0,5 mm et 10 mm. L'épaisseur d'une texture fibreuse correspond à sa plus petite dimension transversale.

Le moule est relié à un système de mise en rotation (non représenté) permettant de mettre le moule en rotation autour de l'axe de rotation X lequel correspond aussi, dans l'exemple illustré, à l'axe longitudinal de la texture 1.

Une fois la texture 1 placée dans le moule, un dispositif de pulvérisation 7 d'une suspension de particules solides est ensuite introduit dans le moule par l'extrémité 5 du moule située du côté opposé à la paroi de fond 4 comme illustré à la figure 3. Le dispositif de pulvérisation 7 présente sur sa surface une pluralité d'orifices 8 au travers desquels une suspension de particules solides est destinée à être introduite dans le volume intérieur 2.

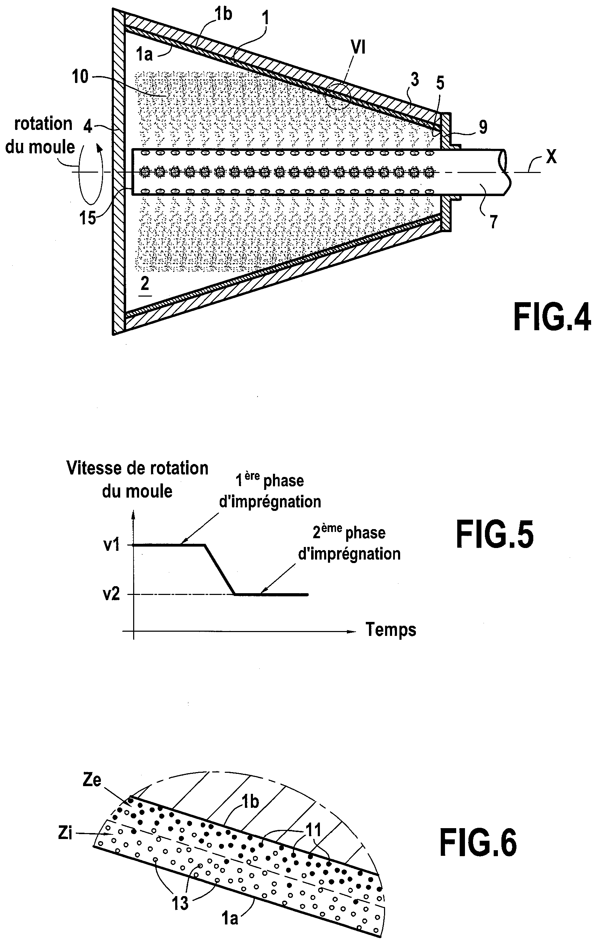

Afin de réaliser l'imprégnation de la texture 1, on referme le moule au niveau de l'extrémité 5 par le couvercle 9. Ensuite, la première suspension 10 comprenant une première poudre de particules solides en matériau céramique ou en carbone en suspension dans un milieu liquide est introduite dans le volume intérieur 2, comme illustré à la figure 4. La première suspension 10 est, dans l'exemple illustré, introduite dans le volume intérieur 2 par pulvérisation par le dispositif de pulvérisation 7. Dans le cadre du deuxième mode de réalisation selon l'invention, le dispositif de pulvérisation 7 va d'abord pulvériser dans le volume intérieur 2 la première suspension puis pulvériser la deuxième suspension. La deuxième suspension comprend une deuxième poudre de particules solides en matériau céramique ou en carbone en suspension dans un milieu liquide, la deuxième suspension étant différente de la première suspension. Ainsi, comme expliqué plus haut, le matériau constituant les particules de la deuxième poudre peut être différent du matériau constituant les particules de la première poudre et/ou les première et deuxième suspensions peuvent présenter des concentrations différentes en particules solides. Des variantes autres que celle illustrée à la figure 4 sont possibles afin d'introduire au moins une suspension de particules solides dans le volume intérieur 2 comme il sera détaillé plus bas. Le moule est quant à lui mis en rotation sur lui-même à une vitesse de rotation non nulle autour de l'axe de rotation X afin d'imprégner par action de la force centrifuge la texture 1 au moins par la première suspension 10. La mise en rotation du moule sur lui-même peut être initiée avant ou pendant l'introduction de la première suspension 10 dans le volume intérieur 2.

Dans le cadre des premier et deuxième modes de réalisation selon l'invention, la vitesse de rotation du moule est modifiée durant l'imprégnation. Le graphe de la figure 5 montre une possibilité d'évolution de la vitesse de rotation imposée au moule. On peut ainsi lors d'une première phase d'imprégnation imposer au moule une première vitesse de rotation constante v₁ puis diminuer continument la vitesse de rotation du moule jusqu'à une deuxième vitesse de rotation v₂ et ensuite réaliser une deuxième phase d'imprégnation durant laquelle on maintient la vitesse de rotation du moule à la valeur v₂. La durée de la première phase d'imprégnation peut être supérieure, égale ou inférieure à la durée de la deuxième phase d'imprégnation. Comme expliqué plus haut, une telle variation de la vitesse de rotation du moule dans le cadre du premier mode de réalisation peut permettre d'imprégner de manière homogène la texture 1 par les particules de la première poudre. On peut aussi mettre en œuvre le profil d'évolution de la vitesse de rotation du moule représenté à la figure 5 dans le cas du deuxième mode de réalisation selon l'invention. Dans ce cas, il est possible d'imprégner majoritairement une zone externe Zₑ de l'épaisseur de la texture 1 par la première suspension durant la première phase d'imprégnation et d'imprégner majoritairement une zone interne Zᵢ de l'épaisseur de la texture 1 par la deuxième suspension durant la deuxième phase d'imprégnation. On a représenté à la figure 6 le résultat pouvant être obtenu dans ce cas. La figure 6 montre que la zone externe Zₑ de la texture 1 a été imprégnée majoritairement par les particules 11 de la première poudre et que la zone interne Zᵢ de la texture 1 a été imprégnée majoritairement par les particules 13 de la deuxième poudre.

Bien entendu, pour le premier ou le deuxième mode de réalisation selon l'invention, des évolutions de la vitesse de rotation du moule différentes de celle illustrée à la figure 5 sont possibles. On peut, en particulier, avoir plus de deux paliers à vitesse constante et éventuellement augmenter la vitesse de rotation du moule à une troisième valeur supérieure à v₂ après la deuxième phase d'imprégnation. En variante, la première vitesse imposée durant la première phase d'imprégnation peut être inférieure à la deuxième vitesse imposée durant la deuxième phase d'imprégnation. Le fait de modifier le profil de vitesse de rotation imposé au moule permet de contrôler l'imprégnation réalisée et par conséquent d'obtenir une répartition prédéterminée des particules dans la texture fibreuse. On peut ainsi en particulier obtenir une imprégnation/répartition homogène, ou une imprégnation/répartition inhomogène avec une évolution contrôlée de la répartition des particules solides le long de l'épaisseur de la texture.

Indépendamment du profil d'évolution de la vitesse de rotation du moule mis en œuvre, il est possible, dans le cadre du premier mode de réalisation selon l'invention, d'imprégner la texture 1 par la première suspension jusqu'à saturation (i.e. jusqu'à remplissage complet). Dans ce cas, la rotation du moule est stoppée après remplissage complet de la texture.

Indépendamment du profil d'évolution de la vitesse de rotation du moule mis en œuvre, il est possible, dans le cadre du deuxième mode de réalisation selon l'invention, d'imprégner jusqu'à saturation la texture 1 par la première suspension et par la deuxième suspension. Dans ce cas, la rotation du moule est stoppée après remplissage complet de la texture.

Indépendamment du profil d'évolution de la vitesse de rotation du moule mis en œuvre et du mode de réalisation selon l'invention considéré, le dispositif de pulvérisation 7 peut être animé d'un mouvement de translation le long de l'axe de rotation X lors de l'imprégnation de la texture 1. L'extrémité 15 du dispositif de pulvérisation 7 peut ainsi effectuer une pluralité d'aller-retour entre deux positions distinctes espacées le long de l'axe de rotation X. Indépendamment ou en combinaison avec ce mouvement de translation qui vient d'être décrit, le dispositif de pulvérisation 7 peut être animé d'un mouvement de rotation lors de l'imprégnation de la texture 1. Dans ce cas, le dispositif de pulvérisation 7 peut tourner dans le même sens de rotation que le moule ou en sens inverse, à la même vitesse de rotation que le moule ou à une vitesse de rotation différente. Le fait d'imposer un mouvement de translation et/ou de rotation au dispositif de pulvérisation 7 peut avantageusement permettre d'améliorer encore le caractère homogène de l'imprégnation réalisée. En variante, le dispositif de pulvérisation 7 reste fixe durant toute l'imprégnation de la texture.

Dans un exemple de réalisation, le sens de rotation du moule et/ou du dispositif de pulvérisation 7 peut être inversé une ou plusieurs fois durant l'imprégnation.

A titre d'exemple, la vitesse de rotation imposée au moule durant tout ou partie de l'imprégnation de la texture par la première suspension et/ou par la deuxième suspension peut être supérieure ou égale à 1 tour/minute, par exemple comprise entre 1 tour/minute et 5000 tours/minute.

La viscosité de la première suspension et/ou de la deuxième suspension peut être d'environ 30 mPa.s lorsque mesurée à l'aide d'un viscosimètre de type Brookfield à la température de 20°C.

La teneur volumique en particules solides dans la première suspension et/ou dans la deuxième suspension peut être inférieure ou égale à 40%. La teneur volumique en particules solides dans la première suspension et/ou dans la deuxième suspension peut être supérieure ou égale à 20%, et par exemple être comprise entre 20% et 40%. L'invention peut avantageusement permettre de mettre en œuvre des suspensions relativement chargées en particules solides car même si ces suspensions présentent une viscosité relativement élevée, il est quand même possible de réaliser l'imprégnation avec ce type de suspensions en augmentant la vitesse de rotation du moule.

De manière connue en soi, la première suspension et/ou la deuxième suspension peut comporter un liant organique.

Dans une variante non illustrée, on peut imprégner à l'aide du même moule simultanément une pluralité de textures fibreuses creuses par la même ou par des suspensions de particules solides différentes. Dans ce cas, au moins une paroi de séparation est présente dans le volume intérieur du moule, cette paroi de séparation délimitant deux chambres de traitement distinctes, une texture fibreuse étant présente dans chacune des chambres de traitement.

On a représenté à la figure 1 un dispositif de pulvérisation 7 présentant une répartition homogène des orifices 8, ces orifices 8 étant tous de la même taille. Bien entendu, on ne sort pas du cadre de l'invention lorsque ce n'est pas le cas. En effet, le dispositif de pulvérisation peut en variante présenter un premier ensemble d'orifices présentant une première taille et un deuxième ensemble d'orifices présentant une deuxième taille différente de la première. Le premier ensemble d'orifices peut être situé dans une première région du dispositif de pulvérisation différente, voire disjointe, d'une deuxième région du dispositif de pulvérisation dans laquelle est situé le deuxième ensemble d'orifices. Les première et deuxième régions peuvent être décalées le long de l'axe de rotation X. Par exemple, la première taille peut être supérieure à la deuxième taille et le premier ensemble d'orifices peut être situé en regard d'une zone de la texture fibreuse de plus grand diamètre que la zone de la texture fibreuse située en regard du deuxième ensemble d'orifices. En variante, les orifices du premier ensemble et les orifices du deuxième ensemble peuvent être mélangés sur la surface du dispositif de pulvérisation.

En variante ou en combinaison avec les caractéristiques précitées relativement à la taille des orifices, la densité des orifices peut varier lorsque l'on se déplace sur la surface du dispositif de pulvérisation. Ainsi, le dispositif de pulvérisation peut dans une première région présenter une première densité d'orifices et peut dans une deuxième région différente de la première présenter une deuxième densité d'orifices différente de la première. Les première et deuxième régions peuvent être décalées le long de l'axe de rotation X. Par exemple, la première densité peut être supérieure à la deuxième densité et la première région peut être située en regard d'une zone de la texture fibreuse de plus grand diamètre que la zone de la texture fibreuse située en regard de la deuxième région.

En variante ou en combinaison avec les caractéristiques précitées, la répartition géométrique des orifices du dispositif de pulvérisation peut varier lorsque l'on se déplace le long de l'axe de rotation X, les orifices étant par exemple disposés en quinconce.

Dans un exemple de réalisation, une couche d'un matériau poreux (non représentée) peut être présente entre la face externe 1b de la texture fibreuse 1 et la paroi latérale 3 du moule. Cette couche en matériau poreux permet de drainer le milieu liquide de la ou des suspensions introduites dans la texture fibreuse tout en permettant de retenir dans la texture fibreuse les particules solides introduites. Du fait de l'utilisation d'une couche en matériau poreux permettant le drainage sélectif du milieu liquide, il est possible d'obtenir une accumulation de particules solides dans la texture fibreuse et ainsi d'augmenter le taux volumique de matrice obtenu à l'issue du procédé.

Une fois l'imprégnation de la texture fibreuse terminée, le milieu liquide de la première suspension et éventuellement de la deuxième suspension est éliminé. Cette élimination peut être effectuée par chauffage ou par aspiration (mise sous vide). Ainsi, le moule peut être muni d'un organe de chauffage ou être placé dans une enceinte chauffée ou encore être relié à un dispositif de pompage permettant d'aspirer le milieu liquide.

On peut alors obtenir une pièce en matériau composite dont la texture fibreuse constitue le renfort fibreux en formant une phase de matrice de densification par exemple par frittage des particules solides présentes dans la texture fibreuse. En variante, si par exemple les particules solides introduites sont des particules de carbone, on peut former une phase de matrice en infiltrant la texture fibreuse par une composition fondue à base de silicium afin de former une phase de matrice en carbure de silicium par réaction entre le carbone introduit dans la texture fibreuse et le silicium fondu. Cet exemple de réalisation dans lequel une phase de matrice est formée par infiltration d'une composition à l'état fondu peut aussi être mis en œuvre lorsque les particules solides introduites dans la texture par centrifugation sont des particules céramiques, par exemple d'un carbure et/ou d'un nitrure.

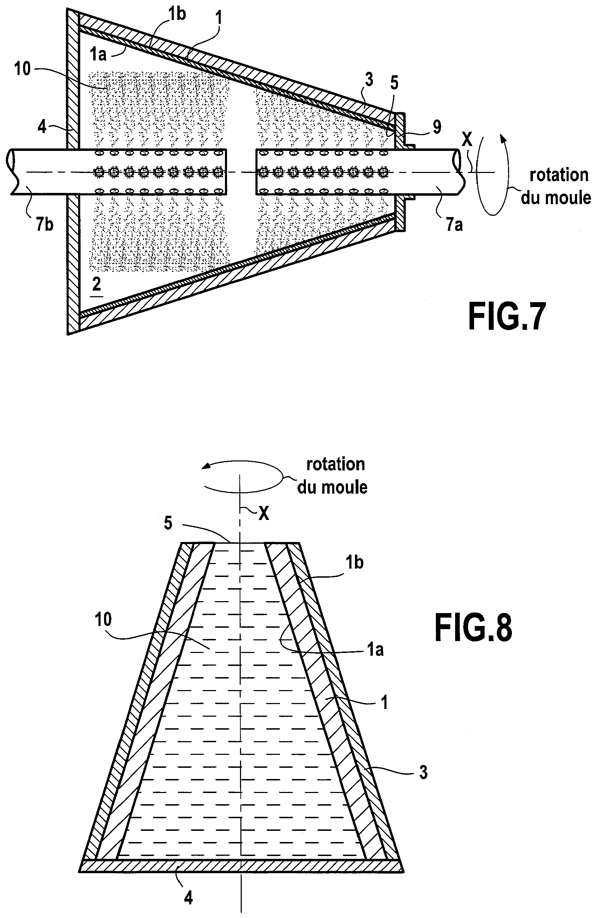

On a représenté à la figure 7 une variante d'étape d'imprégnation selon l'invention dans laquelle deux dispositifs 7a et 7b de pulvérisation sont mis en œuvre. Les dispositifs 7a et 7b sont chacun positionnés au niveau d'une extrémité opposée du moule. Une telle configuration peut être utilisée dans le cadre du premier mode de réalisation selon l'invention ou du deuxième mode de réalisation selon l'invention.

De la même manière que décrit plus haut, le dispositif 7a et/ou le dispositif 7b peut être animé d'un mouvement de rotation et/ou de translation lors de l'imprégnation.

On a représenté à la figure 8 une variante de procédé d'imprégnation selon l'invention. Dans l'exemple représenté à la figure 8, la première suspension 10 est introduite par versement dans le volume intérieur. La suspension est introduite au travers de l'extrémité 5 située du côté opposé à la paroi de fond 4 du moule. Le moule est ensuite mis en rotation sur lui-même comme détaillé plus haut afin d'imprégner la texture 1 au moins par la première suspension 10. On peut, dans le cas de l'exemple illustré à la figure 8, verser dans le volume intérieur une première fraction de la première suspension puis mettre en rotation le moule afin d'imprégner la texture 1 par ladite première fraction et ensuite verser dans le volume intérieur une deuxième fraction de la première suspension afin d'imprégner la texture 1 lors de la rotation du moule par ladite deuxième fraction. En variante ou en combinaison, on peut après imprégnation de la texture 1 par la première suspension 10 verser dans le volume intérieur la deuxième suspension et réaliser l'imprégnation de la texture 1 par la deuxième suspension du fait de la rotation du moule. Comme illustré à la figure 8, la première et éventuellement la deuxième suspension introduite peut remplir sensiblement l'intégralité du volume intérieur.

### Exemple

Une texture fibreuse de forme tronconique présentant un petit diamètre de 20 cm et un grand diamètre de 40 cm et formée de fibres d'alumine « Nextel 610 » fournies par la société 3M a été placée dans un moule. Comme illustré sur la figure 1, la face externe de la texture a été placée en regard d'une paroi latérale du moule, la face interne de la texture délimitant un volume intérieur. Une suspension d'une poudre d'alumine de type SM8 à 20% volumique a été introduite dans le volume intérieur. Afin de réaliser l'imprégnation, la vitesse de rotation du moule a tout d'abord été fixée à 1500 tours/minutes pendant 30 minutes puis cette vitesse de rotation a été diminuée à 750 tours/minutes et maintenue à cette nouvelle vitesse de rotation pendant 30 minutes.

Une fois la texture fibreuse imprégnée, le milieu liquide de la suspension a été éliminé par évaporation sous vide à une pression inférieure ou égale à 20 mbar. Les particules d'alumine ont ensuite été frittées. Le volume de suspension introduit a été choisi de manière à obtenir, après frittage, un taux volumique de fibres dans la pièce d'environ 50% et un taux volumique de matrice d'environ 32%.

L'expression « compris(e) entre ... et ... » ou « allant de ... à ... » doit se comprendre comme incluant les bornes.

## Revendications

1. Procédé d'imprégnation d'une texture fibreuse de forme creuse, le procédé comprenant au moins les étapes suivantes :
- introduire une première suspension (10) comprenant une première poudre de particules solides en matériau céramique ou en carbone dans un volume intérieur (2) délimité par une face interne (1a) d'une texture fibreuse (1) de forme creuse placée dans un moule, une face externe (1b) de la texture fibreuse (1) étant présente en regard d'une paroi (3) du moule, et
- imprégner par action de la force centrifuge la texture fibreuse (1) par la première suspension (10) par mise en rotation du moule sur lui-même,
le procédé d'imprégnation étant **caractérisé en ce que** l'imprégnation de la texture par la première suspension est réalisée en faisant varier la vitesse de rotation du moule durant l'imprégnation de la texture (1) par la première suspension (10).

2. Procédé d'imprégnation d'une texture fibreuse de forme creuse, le procédé comprenant au moins les étapes suivantes :
- introduire une première suspension (10) comprenant une première poudre de particules solides en matériau céramique ou en carbone dans un volume intérieur (2) délimité par une face interne (1a) d'une texture fibreuse (1) de forme creuse placée dans un moule, une face externe (1b) de la texture fibreuse (1) étant présente en regard d'une paroi (3) du moule,
- imprégner par action de la force centrifuge la texture fibreuse (1) par la première suspension (10) par mise en rotation du moule sur lui-même
le procédé d'imprégnation étant **caractérisé par** les étapes suivantes:
- introduire dans le volume intérieur (2), après imprégnation de la texture fibreuse (1) par la première suspension (10), une deuxième suspension comprenant une deuxième poudre de particules solides en matériau céramique ou en carbone, la deuxième suspension étant différente de la première suspension, et
- imprégner par action de la force centrifuge la texture fibreuse (1) par la deuxième suspension par mise en rotation du moule sur lui-même, l'imprégnation de la texture (1) par la première suspension (10) et l'imprégnation de la texture par la deuxième suspension étant effectuées à des vitesses de rotation du moule différentes.

3. Procédé selon la revendication 1, dans lequel l'imprégnation de la texture (1) par la première suspension (10) est réalisée en imposant tout d'abord une première vitesse de rotation constante au moule puis en imposant ensuite une deuxième vitesse de rotation constante au moule, la deuxième vitesse de rotation étant différente de la première vitesse de rotation.

4. Procédé selon la revendication 3, dans lequel la première vitesse de rotation est supérieure à la deuxième vitesse de rotation.

5. Procédé selon la revendication 2, dans lequel l'imprégnation de la texture (1) par la première suspension (10) est réalisée en imposant une première vitesse de rotation constante au moule et dans lequel l'imprégnation de la texture (1) par la deuxième suspension est ensuite réalisée en imposant une deuxième vitesse de rotation constante au moule, la deuxième vitesse de rotation étant différente de la première vitesse de rotation.

6. Procédé selon la revendication 5, dans lequel la première vitesse de rotation est supérieure à la deuxième vitesse de rotation.

7. Procédé selon l'une quelconque des revendications 1 à 6, dans lequel le sens de rotation du moule est inversé une ou plusieurs fois durant l'imprégnation de la texture fibreuse (1) par la première suspension (10) et/ou durant l'imprégnation de la texture fibreuse (1) par la deuxième suspension.

8. Procédé selon l'une quelconque des revendications 1 à 7, dans lequel la première et/ou la deuxième suspension est introduite dans le volume intérieur par pulvérisation par un ou plusieurs dispositifs de pulvérisation (7 ; 7a ; 7b), le ou les dispositifs de pulvérisation (7 ; 7a ; 7b) étant animés d'un mouvement de translation et/ou de rotation durant la pulvérisation.

9. Procédé selon l'une quelconque des revendications 1 à 8, dans lequel la texture fibreuse (1) est axisymétrique.

10. Procédé selon l'une quelconque des revendications 1 à 9, dans lequel la texture fibreuse (1) est obtenue par tissage bidimensionnel ou par tissage tridimensionnel.

11. Procédé selon l'une quelconque des revendications 1 à 10, dans lequel la texture fibreuse (1) comporte des fils céramiques d'oxyde réfractaire et dans lequel les particules de la première poudre et/ou les particules de la deuxième poudre sont des particules céramiques d'oxyde réfractaire.

12. Procédé de fabrication d'une pièce en matériau composite comportant au moins les étapes suivantes :
- imprégner la texture fibreuse (1) au moins par la première suspension (10) par mise en oeuvre d'un procédé selon l'une quelconque des revendications 1 à 11,
- éliminer au moins le milieu liquide de la première suspension (10) imprégnant la texture fibreuse (1),
- former une phase de matrice densifiant la texture (1) fibreuse au moins à partir des particules de la première poudre afin d'obtenir la pièce en matériau composite.

13. Procédé selon la revendication 12, dans lequel la phase de matrice est en tout ou partie formée par frittage des particules de la première poudre.

## Patentansprüche

1. Verfahren zum Imprägnieren einer hohlen faserigen Textur, wobei das Verfahren mindestens die folgenden Schritte umfasst:
- Einleiten einer ersten Suspension (10), die ein erstes Feststoffpartikelpulver aus Keramikmaterial oder aus Karbon umfasst, in ein Innenvolumen (2), das von einer inneren Fläche (1a) einer hohlen faserigen Textur (1) begrenzt wird, die in einer Form platziert ist, wobei eine äußere Fläche (1b) der faserigen Textur (1) einer Wand (3) der Form zugewandt vorhanden ist, und
- Imprägnieren, durch Wirkung der Zentrifugalkraft, der faserigen Textur (1) mit der ersten Suspension (10) durch Inrotationversetzen der Form um sich selbst,
wobei das Imprägnierverfahren **dadurch gekennzeichnet ist, dass** das Imprägnieren der Textur (1) mit der erste Suspension durch Variieren der Rotationsgeschwindigkeit der Form während des Imprägnierens der Textur (1) mit der ersten Suspension (10) durchgeführt wird.

2. Verfahren zum Imprägnieren einer hohlen faserigen Textur, wobei das Verfahren mindestens die folgenden Schritte umfasst:
- Einleiten einer ersten Suspension (10), die ein erstes Feststoffpartikelpulver aus Keramikmaterial oder aus Karbon umfasst, in ein Innenvolumen (2), das von einer inneren Fläche (1a) einer hohlen faserigen Textur (1) begrenzt wird, die in einer Form platziert ist, wobei eine äußere Fläche (1b) der faserigen Textur (1) einer Wand (3) der Form zugewandt vorhanden ist,
- Imprägnieren, durch Wirkung der Zentrifugalkraft, der faserigen Textur (1) mit der ersten Suspension (10) durch Inrotationversetzen der Form um sich selbst,
wobei das Imprägnierverfahren durch die folgenden Schritte gekennzeichnet ist:
- Einleiten, in das Innenvolumen (2), nach dem Imprägnieren der faserigen Textur (1) mit der ersten Suspension (10), einer zweiten Suspension, die ein zweites Feststoffpartikelpulver aus Keramikmaterial oder aus Karbon umfasst, wobei die zweite Suspension von der ersten Suspension unterschiedlich ist, und
- Imprägnieren, durch Wirkung der Zentrifugalkraft, der faserigen Textur (1) mit der zweiten Suspension (10) durch Inrotationversetzen der Form um sich selbst, wobei das Imprägnieren der Textur (1) mit der ersten Suspension (10) und das Imprägnieren der Textur mit der zweiten Suspension bei unterschiedlichen Rotationsgeschwindigkeiten der Form durchgeführt werden.

3. Verfahren nach Anspruch 1, wobei das Imprägnieren der Textur (1) mit der ersten Suspension (10) durchgeführt wird, indem die Form zunächst in eine erste konstante Rotationsgeschwindigkeit versetzt wird, dann die Form in eine zweite konstante Rotationsgeschwindigkeit versetzt wird, wobei sich die zweite Rotationsgeschwindigkeit von der ersten Rotationsgeschwindigkeit unterscheidet.

4. Verfahren nach Anspruch 3, wobei die erste Rotationsgeschwindigkeit höher als die zweite Rotationsgeschwindigkeit ist.

5. Verfahren nach Anspruch 2, wobei das Imprägnieren der Textur (1) mit der ersten Suspension (10) durchgeführt wird, indem die Form in eine erste konstante Rotationsgeschwindigkeit versetzt wird und wobei das Imprägnieren der Textur (1) mit der zweiten Suspension danach durchgeführt wird, indem die Form in eine zweite konstante Rotationsgeschwindigkeit versetzt wird, wobei sich die zweite Rotationsgeschwindigkeit von der ersten Rotationsgeschwindigkeit unterscheidet.

6. Verfahren nach Anspruch 5, wobei die erste Rotationsgeschwindigkeit höher als die zweite Rotationsgeschwindigkeit ist.

7. Verfahren nach einem der Ansprüche 1 bis 6, wobei die Drehrichtung der Form während des Imprägnierens der faserigen Textur (1) mit der ersten Suspension (10) und/oder während des Imprägnierens der faserigen Textur (1) mit der zweiten Suspension ein- oder mehrmals umgekehrt wird.

8. Verfahren nach einem der Ansprüche 1 bis 7, wobei die erste und/oder die zweite Suspension durch Sprühen mit einer oder mehreren Sprühvorrichtungen (7; 7a; 7b) in das Innenvolumen eingeleitet wird, wobei die Sprühvorrichtung(en) (7; 7a; 7b) während des Sprühens in eine Translations- und/oder Rotationsbewegung versetzt sind.

9. Verfahren nach einem der Ansprüche 1 bis 8, wobei die faserige Textur (1) achssymmetrisch ist.

10. Verfahren nach einem der Ansprüche 1 bis 9, wobei die faserige Textur (1) durch zweidimensionales Wirken oder durch dreidimensionales Wirken erhalten wird.

11. Verfahren nach einem der Ansprüche 1 bis 10, wobei die faserige Textur (1) feuerfeste Keramikoxidfasern aufweist und wobei die Partikel des ersten Pulvers und/oder die Partikel des zweiten Pulvers feuerfestem Keramikoxidpartikel sind.

12. Verfahren zur Herstellung eines Teils aus Verbundmaterial, das mindestens die folgenden Schritte aufweist:
- Imprägnieren der faserigen Textur (1) mindestens mit der ersten Suspension (10) durch Durchführung eines Verfahrens nach einem der Ansprüche 1 bis 11,
- Entfernen mindestens des flüssigen Milieus der ersten Suspension (10), die die faserige Textur (1) imprägniert,
- Bilden einer Matrixphase zur Verdichtung der faserigen Textur (1) mindestens aus den Partikeln des ersten Pulvers, um das Teil aus Verbundmaterial zu erhalten.

13. Verfahren nach Anspruch 12, wobei die Matrixphase ganz oder teilweise durch Sintern der Partikel des ersten Pulvers gebildet wird.

## Claims

1. A method of impregnating a fiber texture of hollow shape, the method comprising at least the following steps:
- introducing a first suspension (10) containing a first powder of solid particles of ceramic or carbon material into an inside volume (2) defined by an inside face (1a) of a fiber texture (1) of hollow shape placed in a mold, an outer face (1b) of the fiber texture (1) being presented facing a wall (3) of the mold; and
- using the action of centrifugal force to impregnate the fiber texture (1) with the first suspension (10) by causing the mold to rotate,
the method being **characterized in that** impregnation of the texture (1) with the first suspension (10) is made by varying the speed of rotation of the mold during the impregnation of the texture (1) with the first suspension (10) .

2. A method of impregnating a fiber texture of hollow shape, the method comprising at least the following steps:
- introducing a first suspension (10) containing a first powder of solid particles of ceramic or carbon material into an inside volume (2) defined by an inside face (1a) of a fiber texture (1) of hollow shape placed in a mold, an outer face (1b) of the fiber texture (1) being presented facing a wall (3) of the mold;
- using the action of centrifugal force to impregnate the fiber texture (1) with the first suspension (10) by causing the mold to rotate;
the method being **characterized by** the following steps:
- after the fiber texture (1) has been impregnated with the first suspension (10), introducing a second suspension into the inside volume (2), the second suspension including solid particles of ceramic or carbon material, and being different from the first suspension; and
- using the action of centrifugal force to impregnate the fiber texture (1) with the second suspension by causing the mold to rotate, the impregnation of the texture (1) with the first suspension (10) and the impregnation of the texture with the second suspension being performed at different speeds of rotation of the mold.

3. A method according to claim 1, wherein the texture (1) is impregnated with the first suspension (10) by initially imparting a first constant speed of rotation to the mold and then subsequently imparting a second constant speed of rotation to the mold, the second speed of rotation being different from the first speed of rotation.

4. A method according to claim 3, wherein the first speed of rotation is higher than the second speed of rotation.

5. A method according to claim 2, wherein the texture (1) is impregnated with the first suspension (10) by imparting a first constant speed of rotation to the mold, and wherein the texture (1) is subsequently impregnated with the second suspension by imparting a second constant speed of rotation to the mold, the second speed of rotation being different from the first speed of rotation.

6. A method according to claim 5, wherein the first speed of rotation is higher than the second speed of rotation.

7. A method according to any one of claims 1 to 6, wherein the direction of rotation of the mold is reversed one or more times during impregnation of the fiber texture (1) with the first suspension (10) and/or during impregnation of the fiber texture (1) with the second suspension.

8. A method according to any one of claims 1 to 7, wherein the first and/or second suspension is introduced into the inside volume by spraying through one or more spray devices (7; 7a; 7b), the spray device(s) (7; 7a; 7b) being driven to move in translation and/or in rotation during the spraying.

9. A method according to any one of claims 1 to 8, wherein the fiber texture (1) is axisymmetric.

10. A method according to any one of claims 1 to 9, wherein the fiber texture (1) is obtained by two-dimensional weaving or by three-dimensional weaving.

11. A method according to any one of claims 1 to 10, wherein the fiber texture (1) includes ceramic yarns of refractory oxide and wherein the particles of the first powder and/or the particles of the second powder are ceramic particles of refractory oxide.

12. A method of fabricating a composite material part, the method comprising the following steps:
- impregnating the fiber texture (1) with at least the first suspension (10) by performing a method according to any one of claims 1 to 11;
- eliminating at least the liquid medium of the first suspension (10) impregnating the fiber texture (1); and
- forming a matrix phase densifying the fiber texture (1) at least from the particles of the first powder in order to obtain the composite material part.

13. A method according to claim 12, wherein the matrix phase is formed in full or in part by sintering the particles of the first powder.
